Europäisches Patentamt

European Patent Office

Office européen des brevets

(19)

(11) **EP 1 353 255 A1**

(12) **EUROPÄISCHE PATENTANMELDUNG**

(43) Veröffentlichungstag:
**15.10.2003 Patentblatt 2003/42**

(51) Int Cl.⁷: **G05D 16/20**, G01F 1/74,
G01F 1/86, G01F 1/88

(21) Anmeldenummer: 03006882.9

(22) Anmeldetag: **31.03.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **12.04.2002 DE 10216143**

(71) Anmelder: **Bayer Aktiengesellschaft
51368 Leverkusen (DE)**

(72) Erfinder:
• **Prinz, Thomas, Dr.
51371 Leverkusen (DE)**
• **Stenger, Matthias, Dr.
40789 Monheim (DE)**
• **Jähn, Peter
51375 Leverkusen (DE)**
• **Düster, Ralf
52349 Düren (DE)**

(54) **Vorrichtung zur Dosierung von Gasen**

(57) Vorrichtung zur Aufrechterhaltung eines vorgegebenen Drucks in einem oder mehreren Reaktoren, die mit 1 bis 500 bar Druck beaufschlagbar sind, unter gleichzeitiger Messung des Gasmassenflusses, bestehend aus mindestens einem Pufferbehälter (A), der mit einem Druckmesser (B) ausgestattet ist und über mindestens eine Armatur (C) mit Gas befüllbar ist und wobei der Pufferbehälter (A) mit mindestens einem Reaktor (F) verbunden ist, der ebenfalls mit einem Druckmesser (B') ausgestattet ist, dadurch gekennzeichnet, dass die Verbindung zwischen Pufferbehälter und Reaktor eine Drossel (D) und ein Ventil (E) enthält, das über eine Steuereinheit (H) gesteuert wird, die mit den Druckmessern des Reaktors (F) und des Pufferbehälters (A) über Steuerleitungen verbunden ist.

Fig. 1

**Beschreibung**

Die Erfindung betrifft eine Vorrichtung zur Aufrechterhaltung eines vorgegebenen Drucks in einem Reaktor unter gleichzeitiger Messung des Gasmassenflusses, bestehend aus mindestens einem Pufferbehälter, der mit einem Druckmesser ausgestattet ist und der über mindestens eine Armatur mit gasförmigen Medien befüllbar ist, mindestens einer mit dem Pufferbehälter verbundenen Drossel, die über mindestens ein Ventil mit mindestens einem Reaktor verbunden ist, wobei der Reaktor ebenfalls mit einem Druckmesser ausgestattet ist und wobei das oder die Ventile über ein Steuerelement geschaltet werden, das mit den Druckmessern von Pufferbehälter und Reaktor verbunden ist.

Insbesondere für chemische Reaktionen, die unter Verbrauch eines Gases oder Gasgemisches stattfinden, ist es im Sinne der Prozesssteuerung von Vorteil, den Druck im Reaktionsraum in einem engen Bereich konstant zu halten und die verbrauchte Gasmenge kontinuierlich nachzudosieren.

Es ist weiterhin vorteilhaft, die nachdosierte Gasmenge quantitativ möglichst genau zu erfassen, um den Reaktionsverlauf verfolgen zu können.

Für Größen des Reaktionsraumes ab ca. 50 ml und darüber ist der Einsatz von Gasmassenflussmessern und druckgesteuerten Regelventilen in Kombination mit einem Gaspuffer bekannt. Insbesondere für Screeningverfahren, Prozessoptimierungen und aus Gründen niedrigerer Investitionskosten ist es jedoch wünschenswert, auch für kleinere Reaktionsräume Druck und Gasmengen exakt regeln zu können.

Die bislang bekannten Massendurchflussmesser und -regler, z.B. der Firmen Bronkhorst z.B. Typ F-200-DFGB-22-K MKS z.B. Typ 1179, Tylan oder Brooks z.B. Typ 5850E oder 5851E, haben den Nachteil, dass sie nur für enge Druckbereiche und einen Mindestgasmassenfluss ausgelegt sind, der für Reaktionsräume unter 50 ml nicht geeignet ist.

Druckgesteuerte Regelventile oder integrierte Druckminderventile, wie z.B. Tescom 54-2100 haben den Nachteil, dass sie räumlich sehr anspruchsvoll gebaut sind, und durch ihr großes Eigenvolumen zwangsläufig sehr große Messfehler und Ungenauigkeiten in der Dosierung bei Einsatz für kleine Reaktionsräume erzeugen. Dieser Nachteil ist insbesondere bei der Dosierung von molekularem Wasserstoff gravierend.

In JP 07-324955 wird eine Vorrichtung beschrieben, mit welcher der sekundärseitige Druck unabhängig vom primärseitig anliegenden Druck und bei hohem Gasmengenfluss konstant gehalten werden kann, wobei die Vorrichtung unempfindlich ist gegenüber primärseitigen Druckschwankungen und Störungen. Hier wird eine Kombination von Membran und Regelventil verwendet. Der Gasmengenfluss wird kontinuierlich über ein Oszillationselement gemessen. Als typischer Bereich für den Gasvolumenstrom werden 190 l/h bis 6000 l/h angegeben, was um viele Größenordnungen über dem Bereich liegt, der für die erfindungsgemäß avisierten Größen des Reaktors sinnvoll ist.

Deshalb liegt der Erfindung folgende Aufgabe zugrunde. Es soll eine Vorrichtung gefunden werden, die die Aufrechterhaltung eines vorgegebenen Drucks in einem engen Bereich in einem Reaktor mit einem Volumen von 0,1 bis 50 ml, vorteilhafterweise 1 bis 30 ml erlaubt und die gleichzeitige Messung des Gasmassenflusses ermöglicht.

Bevorzugt sollte eine solche Vorrichtung die Aufrechterhaltung eines vorgegebenen Drucks in einem Bereich von 1 bis 500 bar, vorzugsweise 1 bis 300 bar und besonders bevorzugt 5 bis 300 bar mit einer Abweichung von maximal 1 bar, bevorzugt maximal 0,5 bar ermöglichen. Weiterhin sollte dabei die Dosierung von 5 bis 200 mmol eines gasförmigen Mediums über einen Zeitraum von 0,5 bis 12 Stunden ermöglicht werden.

Die Aufgabe wird gelöst durch eine Vorrichtung zur Aufrechterhaltung eines vorgegebenen Drucks in einem oder mehreren Reaktoren unter gleichzeitiger Messung des Gasmassenflusses, bestehend aus mindestens einem Pufferbehälter, der mit einem Druckmesser ausgestattet ist und über mindestens eine Armatur mit Gas befüllbar ist und wobei der Pufferbehälter mit mindestens einem Reaktor verbunden ist, der ebenfalls mit einem Druckmesser ausgestattet ist, dadurch gekennzeichnet, dass die Verbindung zwischen Pufferbehälter und Reaktor eine Drossel und ein Ventil enthält, das über eine Steuereinheit gesteuert wird, die mit den Druckmessern des Reaktors und des Pufferbehälters über Steuerleitungen verbunden ist.

Der Pufferbehälter besitzt dabei beispielsweise und bevorzugt ein Volumen von 1 bis 1000 ml, besonders bevorzugt 1 bis 100 ml, und ganz besonders bevorzugt 5 bis 30 ml.

Die Drossel stellt einen Engpass in der Verbindung von Pufferbehälter und Reaktor dar und kann beispielsweise in Form einer Kapillare ausgeführt sein und z. B. aus Stahl, Edelstahl, höher legierten Stählen oder Sonderwerkstoffen wie z.B. Nickelbasislegierungen gefertigt sein. Der Durchmesser kann beispielsweise 1 μm bis 1000 μm, bevorzugt 10 μm bis 500 μm, besonders bevorzugt 50 μm bis 200 μm betragen. Die Länge der Kapillare kann beispielsweise 1 mm bis 10000 mm, bevorzugt 100 mm bis 5000 mm und besonders bevorzugt 500 mm bis 2000 mm betragen. Es sind aber auch andere Ausführungen der Drossel möglich, z.B. platt bzw. flach gewalzte, runde Kapillaren, verschweißte flache Platten mit definierter Oberflächenrauhigkeit, poröse Sinterkörper mit definierter Porosität, Mikroblenden oder Mikrodüsen. Solche Ausführungen sind dem Fachmann hinlänglich z.B. aus IDELCHIK, Handbook of Hydraulic Resistance, 3rd, ed. 1994, CCR Press bekannt .

In einer bevorzugten Ausführungsförm hat die Drossel einen rechteckigen schlitzförmigen Strömungsquerschnitt wobei die Höhe des Schlitzes 5 bis 500 μm bevorzugt 5 bis 100 μm und besonders bevorzugt 5 bis 30 μm ist

und die Schlitzbreite grösser als die Schlitzhöhe ist.

Weiterhin ist eine Drossel bevorzugt, die im Einströmbereich mindestens zwei weitere Öffnungen, bevorzugt mindestens fünf weitere Öffnungen und besonders bevorzugt mindestens 10 weitere Öffnungen besitzt, die kleiner sind als der durchschnittliche freie Strömungsquerschnitt der Drossel.

Das Ventil ist in der erfindungsgemäßen Vorrichtung ein geregeltes Ventil, das kurze Schaltwege und -zeiten hat. Die Regelung erfolgt vorzugsweise getaktet.

Der Regelimpuls bewirkt das Öffnen sowie das selbsttätige Schließen des Ventils nach einer definierten Öffnungszeit. Die Gesamtöffnungszeit liegt beispielsweise im Bereich von 1 ms bis 600 s, bevorzugt von 10 ms bis 300 s und besonders bevorzugt 100 ms bis 2000 ms. Die Gesamtöffnungszeit kann alternativ als Gerätekonstante beliebig aber fest vorgegeben werden oder aber als Regelparameter variabel gehalten werden. Im letzteren Fall wird eine besonders große Flexibilität erzielt und es lässt sich ein Gasmengenfluss in einem weiten Bereich steuern..

In einer bevorzugten Ausführungsform der erfmdungsgemäßen Vorrichtung wird ein Ventil mit pneumatischem oder hydraulischem Antrieb eingesetzt, das mit einem das Ventilgehäuse durchsetzenden Durchflusskanal, einem Ventilsitz im Durchflusskanal und einem relativ zum Ventilsitz beweglichen Verschlussmittel versehen ist, welches aus zwei Komponenten besteht, der Ventilspindel mit einseitig fest verbundenem Kolben und einem separaten frei beweglichen Schließkörper, wobei der Kolben in einem Hohlraum, insbesondere einem Zylinderraum, angeordnet ist und den Hohlraum in oberen und unteren Hohlraum teilt und dort beweglich geführt ist, sowie einer Fluiddruckleitung verbunden mit dem oberen Hohlraumteil und einer unteren Fluiddruckleitung, die mit dem unteren Hohlraumteil verbunden ist und das dadurch gekennzeichnet ist, dass das Verschlussmittel durch eine Zentrierplatte oberhalb des Durchflusskanals durchgeführt ist, welche einen Druckentlastungsraum aufweist und Dichtmittel, insbesondere Dichtungsringe aufweist, die den Druckentlastungsraum vom Durchflusskanal und vom unteren Hohlraumteil trennen.

Solch ein Ventil mit integriertem pneumatischen Antrieb hat z.B. einen modularen plattenförmigen Aufbau mit mindestens drei Platten, dazu zählt eine untere Grundplatte, eine angrenzende mittlere Gehäuseplatte und eine aufgesetzte obere Kopfplatte. Die Platten sind insbesondere im Innern mit rotationssymmetrischen zentrierenden Einbauteilen und einem Pneumatikkolben mit einseitig verlängerter Ventilspindel zusammengesteckt, und alle Einbauteile sind untereinander mit elastischen Dichtungen abgedichtet, so dass vier getrennte und unterschiedlich druckbeaufschlagte Räume oder Kammern entstehen, das sind der obere und der untere Hohlraum (Pneumatikraum), ein druckloser Trennraum (Druckentlastungsraum) und der prozessseitige Hochdruckraum (Durchflusskanal). Die einseitig verlängerte Ventilspindel ermöglicht zwischen drei druckbeaufschlagten Räumen eine Kraftübertragung, so dass die wirkende Kraft aus dem oberen oder unteren Pneumatikraum in den Prozessraum (Durchflusskanal) übertragen wird und dadurch ein z.B. frei beweglicher Schließkörper in einen Ventilsitz gepresst oder freigegeben wird und dadurch der Durchgang des Ventils geöffnet oder geschlossen wird.

Die bevorzugten Ausführungsformen des bevorzugten Ventils für die erfindungsgemäße Vorrichtung werden im Folgenden näher erläutert.

Von den vier untereinander getrennten Räumen sind im Betrieb mindestens zwei ständig mit einem unterschiedlichen Druck beaufschlagt.

Der Druckentlastungsraum kann mit einem neutralem Gas oder einer neutralen Flüssigkeit beaufschlagt werden, um einen Sperrdruck zwischen Prozess- und unterem Pneumatikraum auf zu bringen.

Der aufgebrachte Sperrdruck kann mit einem Drucksensor überwacht werden, so das bei abweichendem Druck eine Alarmierung erfolgt und ein Prozess automatisch in eine Sicherheitsstellung gebracht wird.

Das Ventil übernimmt gleichzeitig bei vertikalem Einbau und Verwendung eines freibeweglichen Schließkörpers im Dichtsitz, die Aufgabe eines Rückschlagventils, so dass bei plötzlich auftretendem umgekehrten Differenzdruck, d.h., dass der im Reaktor wirkende Druck größer ist als der anstehende Druck in der Zuleitung der Grundplatte, eine Rückströmung aus dem Prozess verhindert wird. Die Funktion des Rückschlagventils kann aufgehoben werden, wenn das Ventil bei der Montage um 180 Grad verdreht eingebaut wird, so dass die Kopfplatte unten positioniert ist.

In einer bevorzugten Ausführung des bevorzugten Ventils ist die von den Druckfluiden mit Druck beaufschlagte Fläche des Kolbens und die daraus resultierende Kraft im Verhältnis zum Querschnitt der dichtenden Fläche des Ventilsitzes mindestens so groß bemessen, dass die Ventilspindel bei Druckbeaufschlagung des oberen Hohlraumes dem Druck im Einlassbereich des Durchflusskanals entgegenwirkt und eine Durchströmung des Durchflusskanals verhindert.

In einer bevorzugten Ausführung ist, nach der Montage des Kolbens mit einseitig verlängerter Spindel, die verbliebene freie Höhe des unteren und oberen Hohlraums der Kopfplatte gleich groß und so gewählt ist, dass der gesamte Öffnungsweg kleiner als 10 mm ist, bevorzugt kleiner als 5 mm ist und besonders bevorzugt kleiner als 1 mm ist.

Die Dichtmittel im Ventil im Bereich der Spindel sind insbesondere unabhängig voneinander als elastische Weich-, Rundschnurringe, Lippendichtungen, elastische Formdichtungen oder insbesondere als Gleitdichtung ausgebildet.

Besonders bevorzugt werden als Material für die Dichtmittel Elastomere wie Silikon, Viton, Teflon oder ein EPDM-Kautschuk verwendet, wobei die Querschnittsformen der Dichtungsringe rund, quadratisch sein oder auch andere spezielle Querschnittsformen haben können.

Bevorzugt wird somit ein Ventil eingesetzt, bei dem das Ventilgehäuse mehrteilig ausgeführt ist und mindestens eine Aufteilung in eine Kopfplatte zur Aufnahme des Hohlraumes, eine Gehäuseplatte zur Aufnahme des Druckentlastungsraums und des Durchflusskanals sowie eine Grundplatte besteht.

Besonders bevorzugt ist eine Variante, in der der Ventilsitz vom Ventilgehäuse lösbar angebracht ist.

Das Querschnitts - Flächenverhältnis des Pneumatikkolbens zur Querschnittsfläche der einseitig verlängerten Ventilspindel im Bereich des Ventilsitzes ist kleiner als 100, bevorzugt kleiner als 50 und besonders bevorzugt kleiner als 20.

Die wirksame druckbeaufschlagte Fläche des Kolbens mit einseitig angesetzter Ventilspindel mit geringerer Querschnittsfläche bewirkt eine positive Kraftübersetzung und -übertragung auf den frei beweglichen kleineren Schließkörper und dessen wirksame dichtende Fläche, so dass das Ventil selbst bei hohen Differenzdrücken mit einer niedrigen Stellkraft dicht verschlossen werden kann.

Das bevorzugte Ventil besitzt im oberen Teil des Ventilgehäuses eine Einstellschraube, z.B. eine Verstellspindel, besonders bevorzugt eine Mikrometerschraube, mit der der obere Endpunkt des Kolbens und damit der Hub der Ventilspindel eingestellt und begrenzt werden kann.

Mit der Einstellschraube kann der maximale Weg des Pneumatikkolbens mit Ventilspindel reduziert werden, so dass bei hohen Differenzdrücken der Kolbenweg, zwischen AUF- und ZU-Stellung des Ventils minimiert ist und dadurch ein Abrieb an der Spindeldichtung vermindert wird und die Standzeit des Ventils wesentlich vergrößert wird.

In einer bevorzugten Ausführung des bevorzugt eingesetzten Ventils ist der Öffnungs- und Schließweg so bemessen, dass die Eigenverformung der elastischen Dichtungen an der Ventilspindel und am Kolben genutzt wird, um das Ventil verschleißarm zu öffnen und zu schließen.

Die Länge des Kolbenwegs verhält sich insbesondere umgekehrt proportional zum Differenzdruck zwischen Ein- und Austrittsöffnung des bevorzugten Ventils, und ist bevorzugt höchstens 10 mm, besonders bevorzugt höchstens 5 mm und insbesondere besonders bevorzugt höchstens 1 mm.

Das für die erfindungsgemäße Vorrichtung bevorzugte Ventil besitzt in einer besonders bevorzugten Ausführung einen frei beweglichen Schließkörper, der in verlängerter Achse des Pneumatikkolbens mit einseitig verlängerter Ventilspindel sitzt. Der Schließkörper sitzt z.B. in einer Vertiefung der Gehäuseplatte mit dem Ventilsitz, und die Breite des konzentrischen Ringspaltes, gebildet durch den Durchmesser der Vertiefung und dem Durchmesser der Ventilspindel, ist kleiner als der Durchmesser des beweglichen Schließkörpers.

Weiterhin bevorzugt ist bei dem bevorzugten Ventil die Dichtsitzfläche des Ventilsitzes eben oder insbesondere konisch verengt ausgeführt. Der Schließkörper ist bevorzugt als Kugel, Zylinder, Scheibe oder Kegel ausgeführt.

Die Höhe der Vertiefung im Ventilsitz zur Aufnahme des frei beweglichen Schließkörpers ist in einer bevorzugten Bauform des Ventils kleiner als die zweifache Höhe des Schließkörpers, bevorzugt kleiner als die Höhe des Schließkörpers und besonders bevorzugt kleiner als die halbe Höhe des Schließkörpers.

Der Durchmesser der Vertiefung oder Senkbohrung in der Verschlussplatte ist kleiner als der 2fache-Durchmesser des Schließkörpers, bevorzugt kleiner als der 1,5fache-Durchmesser des Schließkörpers und besonders bevorzugt kleiner als der 1,3fache-Durchmesser des Schließkörpers.

Der Winkel $\alpha$ beträgt im Falle der konisch konzentrischen Dichtfläche im Ventil zur Horizontalen gesehen bevorzugt 0 bis 70 Grad, besonders bevorzugt von 30 bis 60 Grad und ganz besonders bevorzugt von 40 bis 50 Grad.

Der Schließkörper des Ventils kann aus verschieden Materialien bestehen, z.B., aus Stahl, Hastelloy, Glas, Keramik bzw. aus Kunststoff.

Die Materialien des Ventilsitzes und des Schließkörpers sind in einer bevorzugten Ausführung unterschiedlich. Vorzugsweise hat der Schließkörper eine höhere Oberflächenhärte als der Ventilsitz.

Der im Zylinderraum der Kopfplatte positionierte Kolben kann mit zusätzlichen Druckfedern ausgerüstet sein, um z.B. bei Steuerluftausfall eine gewünschte Sicherheitsstellung anzunehmen.

Bevorzugt ist ein Ventil, bei dem im oberen Hohlraumteil ein Federelement angebracht ist, das auf die Ventilspindel in Richtung des Ventilsitzes wirkt, oder im unteren Hohlraumteil ein Federelement angebracht ist, das auf die Ventilspindel entgegengesetzt zum Ventilsitz wirkt.

Der Schließkörper ausgebildet als Ventilplatte hat in einer bevorzugten Variante eine zusätzliche elastische Dichtung um den Ventildurchgang dicht zu verschließen.

Bevorzugt wird eine Ausführung des Ventils eingesetzt, bei welcher die Fluiddruckleitungen mit Druckluft betrieben sind.

Bevorzugt ist eine Ausführung des Ventils, in dem ein separierbares Filter- bzw. Siebgewebeelement im Bereich der Zuleitung vor dem Dichtsitz, insbesondere zwischen Grundplatte und Dichtsitz eingebaut ist.

Der Einbau eines Filters hält Schmutzpartikel und sonstige harte Fremdpartikel zurück, so dass insbesondere ein weicher Dichtsitz oder elastische Dichtungen nicht beschädigt werden.

Ein solches dicht schließendes, modular aufgebautes pneumatisch gesteuertes Ventil zeichnet sich insbesondere durch geringe Öffnungs- und Schließzeiten aus, ermöglicht auch bei hohen Differenzdrücken den Durchtritt kleinster Gasmengen und ist auch nach 100000 Schaltzyklen gasdicht.

Die Kombination aus Drossel und Ventil mit kurzer Schaltzeit in der erfindungsgemäßen Vorrichtung erlaubt den Durchtritt von Gasmengen im Bereich von 1 bis 1000 mmol / Takt, bevorzugt 1 bis 200 mmol / Takt, besonders bevorzugt 1 bis 5 mmol/Takt bei 1 bis 500 bar und 20 bis 300 °C.

Als Armatur kann jede beliebige für die oben genannten Druckbereiche einsetzbare Armatur eingesetzt werden, wie z.B. Druckminderventile, (z.B. TESCOM 54-2100). Es ist weiterhin möglich als Armatur ein Ventil einzusetzen, wie es oben beschrieben wurde. Damit kann bei Bedarf in einfacher Weise auch ein Zeitverlauf für den Maximaldruck vorgegeben werden.

Als Werkstoffe für alle beschriebenen Teile, die mit verdichteten Gasen in Kontakt kommen können sind metallische Werkstoffe geeignet. Insbesondere sind das Edelstähle wie z.B. 1.4571, SS 316 oder Legierungen, wie etwa Nickelbasislegierungen oder bei korrosiven Medien auch Sonderwerkstoffe wie z.B. Titan, Tantal, gegebenenfalls in Form einer Auskleidung.

Besonders vorteilhaft erweist sich die beschriebene Vorrichtung, wenn der Reaktor als Reaktionsraum für chemische Reaktionen dient, insbesondere für solche, die unter Verbrauch eines gasförmigen Mediums ablaufen. Solche gasförmigen Medien, die bei chemischen Reaktionen verbraucht werden, können beispielsweise sein: Wasserstoff, Kohlenmonoxid, Kohlendioxid, Chlor, Phosgen, Ammoniak oder Mischungen solcher Gase wie insbesondere Wasserstoff/Kohlenmonoxid. Gegebenenfalls können diese Gasmischungen auch noch mit unter Reaktionsbedingungen inerten Gasen verdünnt sein. Typische Beispiele sind Stickstoff und Edelgase wie zum Beispiel Argon. Daher eignen sich die erfindungsgemäßen Vorrichtungen insbesondere zur Durchführung von Hydrierungen, Hydroformylierungen, Carbonylierungen, Carboxylierungen, Aminierungen, Oxidationen und Chlorierungen. Weiterhin eignet sich erfindungsgemäße Vorrichtung insbesondere zur parallelisierten Durchführung von chemischen Reaktion, bevorzugt solchen, die unter Verbrauch eines gasförmigen Mediums ablaufen.

Die erfindungsgemäße Vorrichtung zeichnet sich dadurch aus, dass die Dosierung eines gasförmigen Mediums in einem kleinen Reaktor in einem sehr breiten Temperatur- und Druckbereich und unter Einhaltung enger Druckgrenzen möglich ist.

Die Erfindung wird nachstehend anhand der Figuren beispielhaft näher erläutert:

Es zeigen:

Figur 1    eine schematische Darstellung der erfindungsgemäßen Vorrichtung
Figur 2    eine Schnittdarstellung durch das Ventil mit allen Einzelteilen
Figur 3    eine Schnittdarstellung durch den Einströmbereich der Drossel

In den Figuren werden die Bezugszeichen wie folgt zugeordnet:

**(Bezugszeichenliste)**

A        Pufferbehälter
B, B'     Druckmesser des Pufferbehälters 1
C        Armatur
D        Drossel
E        Ventil
F        Reaktor
G        Druckmesser des Reaktors F
H        Steuereinheit
I         Pneumatische Verbindungsleitung, z.B. Schlauch
J         Elektro-pneumatische 5/2-Wegeventile
K        Verbindungsleitung f. Digitalsignale, z.B. Kabel
L         Verbindungsleitung f. Analogsignale, z.B. Kabel
M        Verbindungselement zwischen Kapillare und Drossel, z.B. Schneidringverschraubung

1        Kopfplatte
2        Gehäuseplatte
3        Kolben
4        Verschlussplatte
5        Zentrierplatte

EP 1 353 255 A1

| 6 | Grundplatte |
| 7 | Ventilsitz |
| 8 | Gehäuse des Ventilsitzes |
| 9 | Gewindering der Verstellschraube |
| 10 | Verstellschraube |
| 11 | Dichtung der Verstellschraube |
| 12 | Kolbendichtung |
| 13 | Kolbenspindel - Dichtung |
| 14 | Äußere Verschlussplatten - Dichtung |
| 15 | Zentrierplattendichtung zum Gehäuse |
| 16 | Ventilspindel - Dichtung der Zentrierplatte |
| 17 | Obere Ventilsitz - Dichtung |
| 18 | Untere Ventilsitz - Dichtung |
| 19 | Dichtung zwischen Grundplatte u. Ventilsitz- Gehäuse |
| 20 | Konzentrische Nut zur Aufnahme einer Feder mit ZU - Wirkung |
| 21 | Konzentrische Nut zur Aufnahme einer Feder mit AUF - Wirkung |
| 22 | Runder Bolzen an der Verstellspindel |
| 23 | Ringspalt |
| 24 | Schrauben |
| 25 | Beweglicher Schließkörper |
| 26 | Energie - Anschluss |
| 27 | Energie - Anschluss |
| 28 | Zuleitung in der Grundplatte vom Pufferbehälter A |
| 29 | Ableitende Bohrung im Gehäuse zum Reaktor F |
| 30 | Radiale Gehäusebohrung |
| 31 | Ventilspindel oder Kolbenspindel |
| 32 | oberer Pneumatikraum |
| 33 | unterer Pneumatikraum |
| 34 | Radiale Bohrung der Zentrierplatte |
| 35 | Umlaufende Nut der Zentrierplatte |
| 36 | Bohrung (Senkung, Vertiefung) zur Aufnahme des Schließkörpers |
| 37 | Zuführende Bohrung |
| 38 | Konisch konzentrische Dichtfläche im Ventilsitz |

**Beispiele**

**Beispiel 1**

Kenndaten:

Pufferbehälter: Volumen 25 ml, Material 2.4602

Reaktor: Volumen 42 ml, Material 2.4602

Stahlkapillare: Firma Hamilton, Nr. 065999, SS-Tubing 304/G23S/1200mm/Pst.3. Digitale Ein/Ausgabekarte des Systems Labmanager der Firma Hitec Zang.

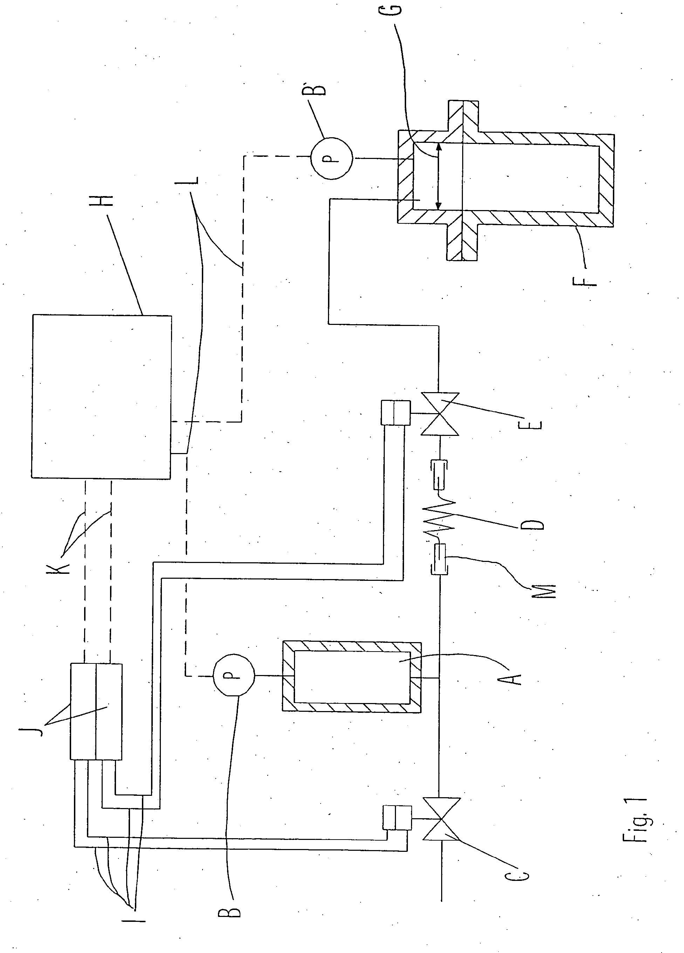

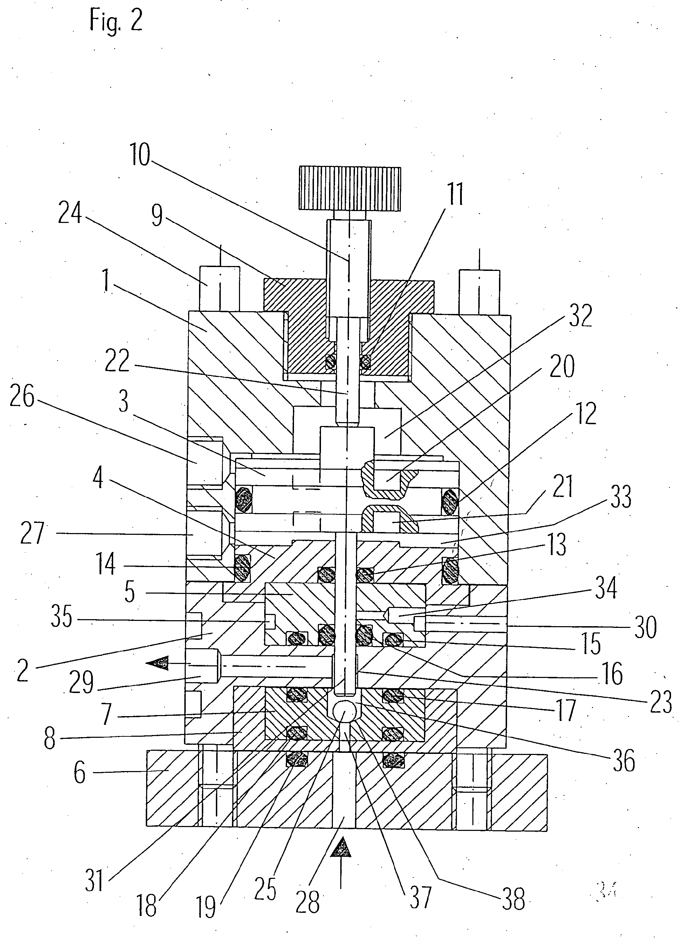

In Fig. 1 ist beispielhaft der Aufbau der erfindungsgemässen Vorrichtung zur Dosierung von Gasen dargestellt. Die Gasversorgung ist am Eintritt der pneumatisch steuerbaren Armatur (C) angeschlossen. Der pneumatische betriebene Antrieb der Armatur (Fig. 2) ist mit Schlauchleitungen mit einem z.B. elektro-pneumatischem 5/2-Wegeventil (J) verbunden. Das elektro-pneumatische Ventil schaltet Druckluft auf den Stellantrieb für die Auf / Zu- Bewegung des Ventils, wenn das entsprechende Digitalsignal über die elektrischen Verbindungen (K) (Kabel bzw. Leitungen) aus der Steuereinheit (H) gesendet werden. In Strömungsrichtung des angeschlossenen Druckgases befindet sich hinter der Armatur ( C ) der Pufferbehälter (A) mit einem Drucksensor (B) der ebenfalls mit einer elektrischen Verbindungsleitung (L) mit der Steuereinheit verbunden ist. Der Pufferbehälter ermöglicht zum einen die Dosierung aus einem Gasraum definierten konstanten Drucks, zum anderen wird zur. die Gasmengenbestimmung herangezogen (s.u.). Hinter dem Pufferbehälter ist eine Drossel (D), hier z. B. eine gewickelte Kapillare dargestellt, und hinter der Drossel ist ein weiteres steuerbares Ventil (E) montiert und die Gasauslass-Seite der Armatur ist mit dem Behälter (F) verbunden, wobei der Behälter einen Durchmesser (G) und einen angeschlossenen Drucksensor (B') hat. Das Ventil und die Armatur sind auf gleiche Weise wie die Druckmesser bzw. Drucksensoren (B) und (B') mit der Steuereinheit verbunden. Die Drossel (D) ist beispielhaft beidseitig mit einer Schneidringverschraubung (M) versehen, um im Betrieb ein schnelles Wechseln zu ermöglichen. Als Drossel (D) kann z.B. eine Edelstahlkapillare der Firma Hamilton, Nr. 065999, SS-Tubing 304/G23S/1200mm/Pst.3 eingesetzt werden, oder alternativ eine metallische Kapillare die vollständig flach gewalzt worden ist, so dass ein rechteckiger durchlässiger Spalt im Innern der kaltverformten Kapillare entsteht. Der entstehende innere rechteckige durchlässige Spalt bildet eine Rechteckdrossel die in ihrer Länge und dadurch in ihrem Druckverlust einfach ausgewählt und angefertigt werden kann. Eine andere Möglichkeit, eine Drossel mit hohem Widerstand zu fertigen, besteht darin, zwei Flacheisen mit definierter Oberflächenrauhigkeit miteinander zu verschweissen. Dadurch können Spalte parallel zu den äusseren druckdichten Verschweissungen realisiert werden, die ebenfalls einen hohen Druckverlust bilden. In allen Drosselvarianten steigt der Druckverlust linear mit der Länge der Drossel.

Die Funktionsweise der Vorrichtung ist dergestalt, dass bei Unterschreiten eines vorgegebenen Grenzwertes für den Istwert des Reaktorinnendrucks $p_{F,Ist}$ ein Signal durch die Steuereinheit (H) an das Ventil (E) gegeben wird, wodurch dieses Ventil einen Takt öffnet und nach der vorgegebenen Öffnungszeit wieder schließt. Dieser Grenzwert wird üblicherweise als Differenz aus dem Sollwert $p_{F,Soll}$, welcher auch zeitlich veränderlich sein kann, und einer geeignet wählbaren zulässigen Abweichung $\Delta p$ gebildet. Während eines Fördertaktes (= Öffnungszeit des Ventils) strömt dann eine bestimmte Gasmenge aus dem Pufferbehälter (A) über eine Drossel (D) in den Reaktor (F). Dieser Zyklus wird so lange wiederholt, bis der vorgegebene Sollwert erreicht ist. Durch Auswahl einer Kapillare geeigneter Länge und geeignete Wahl des Vordrucks im Pufferbehälter A läßt sich das System abstimmen. Bevorzugt wird eine Einstellung gewählt, daß der Druckabfall $\Delta p$ im Reaktor F gerade mit einigen wenigen Ventiltakten ausgeglichen werden kann.

Es ist darauf zu achten, dass der Druck im Pufferbehälter (A) höher ist, als der Solldruck im Reaktor (F). Vorzugsweise sollte die Einstellung des Druckes im Pufferbehälter (A) so gewählt werden, dass der Druck zwischen 10 und 50 bar höher ist, als der Solldruck im Reaktor (F). Der Druck im Pufferbehälter (A) wird bei Unterschreiten eines Minimaldrucks $p_{A,min}$, der höher liegen muss als der vorgegebene Solldruck im Reaktor (F) durch Öffnen der Armatur (C) wieder erhöht. Der Pufferbehälter (A) erreicht dabei seinen Maximaldruck $p_{A,max}$.

Bei bekanntem Volumen des Pufferbehälters und Maximal- und Minimalwert der Drucke $p_{A,max}$ und $p_{A,min}$ innerhalb eines Schaltzyklus des Puffers kann bei gegebener Temperatur die pro Schaltzyklus geförderte Gasmenge in einfacher Weise ermittelt werden. Bevorzugt geschieht die Berechnung des Gasmassenflusses unter Verwendung der thermischen Zustandsgleichung des idealen Gases gemäß:

$$\Delta n = \frac{V_A \cdot \left(p_{A,max} - p_{A,min}\right)}{\Re \cdot T_A}$$

*mit* :

$\Delta n$:　　　　　　　geförderte Gasmenge [mol]

$P_{A,max}, P_{A,min}$ :　　Maximal - bzw Minimaldruck im Puffer während eines Förderzyklus'

$V_A$ :　　　　　　　Volumen des Puffers [m³]

$\Re$ :

$$\text{Universelle Gaskonstante} = 8.315 \left[\frac{J}{mol \cdot K}\right]$$

$T_A$ :　　　　　　　absolute Temperatur im Puffer [K]

Bei Bedarf kann auch eine andere Zustandgleichung verwendet werden, welche Realgaseffekte erfaßt. Weiterhin kann der Joule-Thompson-Effekt berücksichtigt werden. Dieser wirkt sich jedoch in der Regel im Puffer nur schwach aus, so daß er meist von untergeordneter Bedeutung ist.

In Figur 2 ist ein Ventil mit integriertem pneumatischen Verstellantrieb in einer Schnittdarstellung gezeigt. Das Ventil hat drei Hauptplatten, die Kopfplatte 1, die Gehäuseplatte 2 und die Grundplatte 6. Alle Platten werden z.B. mit vier Schrauben 24 zusammen gehalten.

Die Kopfplatte 1 hat im Innern eine abgesetzte Bohrung. Die Bohrung bildet den Hohlraum 32, 33, im folgenden Pneumatikraum genannt. Der Pneumatikraum 32, 33 der Kopfplatte 1 schafft Raum für die Aufnahme eines Kolbens 3 mit einseitig ansitzender Ventilspindel 31. Der Kolben 3 hat auf seinem Umfang eine Nut zur Aufnahme der elastischen Kolbendichtung 12. Die Kolbendichtung 12 und der Kolben 3 teilen den Pneumatikraum 32, 33 in einen unteren Hohlraum 33 und einen oberen Hohlraum 32 (auch unterer bzw. oberer Pneumatikraum genannt).

Der untere Pneumatikraum 33 wird mit einer zentrierenden Verschlussplatte 4 und einer zugehörigen äußeren Dichtung 14 versehen, die den unteren Pneumatikraum 33 zur inneren Bohrung der Kopfplatte 1 abdichtet. Die Kolbenspindel - Dichtung 13 dichtet den unteren Pneumatikraum 33 zur Ventilspindel 31 ab, so dass der untere Pneumatikraum gegen Druck verschlossen ist.

Der obere Pneumatikraum 32 und der untere Pneumatikraum 33 haben jeweils zuoder abführende Anschlüsse 26, 27 für Fluide, z.B. Pressluft. So kann wahlweise, je nach Auf- oder Zu-Stellung des. Ventils die benötigte Verstellkraft, durch z.B. Druckluft von 6 bar, durch die Leitung 27 auf die jeweils wirksame untere oder durch Leitung 26 auf die obere Kolbenfläche geleitet werden, so dass der Kolben 3 mit der Ventilspindel 31 in die gewünschte Endstellung gedrückt wird.

Die Verschlussplatte 4 und die innen liegende Zentrierplatte 5 zentrieren die Kopfplatte 1 und die Gehäuseplatte 2 miteinander, so dass die am Pneumatikkolben 3 einseitig angesetzte Ventilspindel 31 im Zentrum des Ventilkörpers bis in den Durchflusskanal 28, 29 nahe dem beweglichen Schließkörper 25 (Stahlkugel) verlängert werden kann.

Die untere Ebene der Zentrierplatte 5 sitzt eng in der Gehäuseplatte 2 und der obere Bereich der Zentrierplatte 5 sitzt eng in der Verschlussplatte 4, so dass die Ventilspindel 31 mit der Dichtung 16 den produktberührten Raum des Ventilgehäuses (Durchflusskanal) abdichtet. Die Zentrierplatte 5 hat eine weitere Dichtung 15 zur Gehäuseplatte 2, um eine Bypass-Leckage zu verhindern. Oberhalb der Kolbenspindel-Dichtung 16 ist eine radiale Bohrung 34 vorgesehen, die in eine umlaufende Nut 35 mündet. Die umlaufende Nut 35 grenzt an eine radiale Gehäuse-Bohrung 30. Dadurch wird der Abschnitt der Ventilspindel zwischen der Dichtung 13 und der Dichtung 16 frei belüftet (Druckentlastungsraum). Dadurch kann bei Ausfall der Ventilspindeldichtungen 13, 16 ein entstehender Druck direkt entspannt werden. Auch besteht für den Anwender die Möglichkeit die Dichtigkeit des Ventils zu überprüfen.

Die Gehäuseplatte 2 sitzt auf der Grundplatte 6 und hat in ihrem unteren Teil eine Bohrung für die Aufnahme des Ventilsitzes 7. Ist der Ventilsitz 7, wie im Beispiel nach Figur 1 gezeigt, aus Kunststoff gefertigt, kann es erforderlich sein, den Ventilsitz 7 aus Kunststoff, insbesondere bei hohen Prozess-Drücken, mit einem zusätzlichen Gehäuse 8 zu kammern. Der Ventilsitz 7 hat eine obere mittige Bohrung 36 zur Aufnahme des freibeweglichen Schließkörpers 25 und in Verlängerung der Bohrungsachse eine angrenzende kleinere Bohrung 37, durch die der durchströmende Stoff von der Zuleitung 28 geleitet wird. Im Übergangsbereich der Bohrungen 36, 37 ist eine konische, konzentrische Dichtfläche 38 ausgebildet, damit sich der Schließkörper mittig zentrieren und abdichten kann. Der Ventilsitz ist hier eine Scheibe, die auf der oberen Ebene eine Dichtung 17 hat, die zur Gehäuseplatte 2 eine Bypass-Strömung verhindert. Zwischen Ventilsitz 7 und umschließendem Gehäuse 8 ist eine weitere Dichtung 18 plaziert.

Die Grundplatte 6 ist mit der Dichtung 19 zum Gehäuse 8 des Ventilsitzes 7 abgedichtet, so dass ein anstehender Druck in der Ventilzuleitung 28 den Ventilsitz 7 passieren muss, um durch die ableitende Bohrung 29 im Gehäuse 2 das Ventil verlassen zu können. Der Durchflusskanal wird hier durch die Leitungen 28, 29 und die Bohrungen 36, 37 gebildet.

In der vertikalen Achse der Kopfplatte 1 ist zusätzlich eine Gewindebohrung vorgesehen um einen Gewindering 9 aufzunehmen. Dieser Ring 9 dient zur Aufnahme der Verstellspindel 10 mit abgesetztem runden Bolzen 22. Der Bolzen 22 erstreckt sich bis in den oberen Pneumatikraum und ist mit der Dichtung 11 nach außen abgedichtet. Die Verstellspindel mit abgesetztem Bolzen bildet den oberen Anschlag für die Kolbenbewegung und begrenzt durch die am Kolben 3 sitzende Ventilspindel 31 den maximalen Öffnungsweg des freibeweglichen Schließkörpers. Den unteren Anschlagpunkt des freibeweglichen Schließkörpers bildet die konisch konzentrische Dichtfläche 38. Der untere Anschlagpunkt ist die ZU-Stellung und der obere Anschlagpunkt ist die AUF-Stellung des Ventils.

Das Ventil (E) funktioniert folgendermaßen: Bei anstehendem Prozessdruck in der zuleitenden Bohrung oder Kanal 28 der Grundplatte 6, das heißt vom Pufferbehälter A, wird ein Durchströmen des Ventils verhindert, wenn im oberen Pneumatikraum 32 über den Energieanschluss 26 z.B. Druckluft ansteht und eine entsprechende Schließkraft aufgebracht wird. Die Druckluft bzw. die daraus resultierende Schließkraft bewirkt das Herunterdrücken des Pneumatikkolbens 3 mit angesetzter Ventilspindel 31, so dass die untere Fläche der Ventilspindel 31 mit der anstehenden Kraft des Kolbens 3 den freibeweglichen Schließkörper 25 in den konzentrischen Dichtsitz 38 drückt. Die wirkende Kraft auf den Pneumatikkolben ist größer als die anstehende Druckkraft unterhalb des Schließkörpers, die über die Zuleitung 28 vom Pufferbehälter A wirkt. Wird die Druckluft nun auf den unteren Pneumatikraum 33 geschaltet und gleichzeitig der obere Pneumatikraum 32 entspannt, hebt sich der Pneumatikkolben 3 bis er die untere Fläche des Bolzens 22 der Verstellspindel 10 berührt. Gleichzeitig wird die Bewegungsmöglichkeit des frei beweglichen Schließkörpers 25 frei gegeben, so dass bei anstehendem Druck unter dem Schließkörper 25, dieser hochgedrückt wird und den Ventildurchgang 28, 29 öffnet. Das anstehende Produkt bzw. Medium kann nun den Schließkörper 25 umströmen, passiert den Ringspalt 23, der durch die runde Kolbenspindel und den größeren vertikalen Ableitkanal gebildet wird um dann in die ableitende Bohrung 29 des Gehäuses zu gelangen, die zum Reaktor F führt.

Die Verknüpfung der Armatur (C) und des Ventils (E) mit den weiteren Bauteilen der Erfindung ist in Fig. 1 beschrieben.

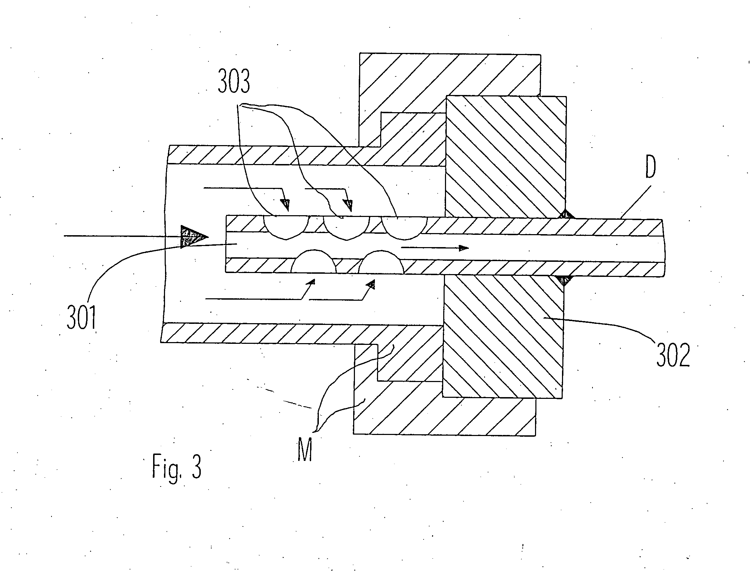

In Fig. 3 ist der Gaseintritt an der Drossel (D), beispielsweise einer runden Kapillare mit einem Innendurchmesser von ca. 90 µm, gezeigt und die Eintrittsseite der Drossel oder der Kapillare (301) ist mit einem Verschlussstopfen (302) einer Schneidringverschraubung (M) unlösbar verbunden. Der Einlass der Drossel ist so ausgebildet, dass das eingeschweisste bzw. eingelötete Ende der Drossel hervorsteht. Entlang der vorstehenden Kapillare parallel zur Mittenachse befinden sich mehrere seitliche Gaseintrittsöffnungen (303).

**Patentansprüche**

1. Vorrichtung zur Aufrechterhaltung eines vorgegebenen Drucks in einem oder mehreren Reaktoren, die mit 1 bis 500 bar Druck beaufschlagbar sind, unter gleichzeitiger Messung des Gasmassenflusses, bestehend aus mindestens einem Pufferbehälter (A), der mit einem Druckmesser (B) ausgestattet ist und über mindestens eine Armatur (C) mit Gas befüllbar ist und wobei der Pufferbehälter (A) mit mindestens einem Reaktor (F) verbunden ist, der ebenfalls mit einem Druckmesser (B') ausgestattet ist, **dadurch gekennzeichnet, dass** die Verbindung zwischen Pufferbehälter und Reaktor eine Drossel (D) und ein Ventil (E) enthält, das über eine Steuereinheit (H) gesteuert wird, die mit den Druckmessern des Reaktors (F) und des Pufferbehälters (A) über Steuerleitungen (I, K, L) verbunden ist.

2. Vorrichtung nach Anspruch 1, **dadurch gekennzeichnet, dass** als Drossel (D) Kapillaren, platt gewalzte, runde Kapillaren, verschweißte flache Platten mit definierter Oberflächenrauhigkeit, poröse Sinterkörper mit definierter Porosität, Mikroblenden oder Mikrodüsen oder Kombinationen davon eingesetzt werden.

3. Vorrichtung nach einem oder mehreren der Ansprüche 1 bis 2, **dadurch gekennzeichnet, dass** als Drossel eine Kapillare mit einem Durchmesser von 1 µm bis 1000 µm und einer Länge von 1 mm bis 10000 mm eingesetzt wird.

4. Vorrichtung nach einem oder mehreren der Ansprüche 1 bis 3, **dadurch gekennzeichnet, dass** die Drossel (D) einen rechteckigen schlitzförmigen Strömungsquerschnitt hat, die Höhe des Schlitzes 5 bis 500 µm beträgt und die Schlitzbreite grösser als die Schlitzhöhe ist.

5. Vorrichtung nach einem oder mehreren der Ansprüche 1 bis 4, **dadurch gekennzeichnet, dass** die Drossel im Einströmbereich mindestens zwei weitere Öffnungen besitzt, die kleiner sind als der durchschnittliche freie Strömungsquerschnitt der Drossel.

6. Vorrichtung nach einem oder mehreren der Ansprüche 1 bis 5, **dadurch gekennzeichnet, dass** das Ventil eine Schaltzeit von 1 ms bis 600 s besitzt.

7. Vorrichtung nach einem oder mehreren der Ansprüche 1 bis 6, **dadurch gekennzeichnet, dass** ein Ventil mit pneumatischem oder hydraulischem Antrieb eingesetzt wird, das mit einem das Ventilgehäuse (2, 6) durchsetzenden Durchflusskanal (28, 29), einem Ventilsitz (7) im Durchflusskanal (28, 29) und einem relativ zum Ventilsitz (7) beweglichen Verschlussmittel (31, 25), insbesondere einer Kombination aus Ventilspindel (31) und davon getrenntem Schließkörper (25), einem mit dem Verschlussmittel (31) verbundenen Kolben (3), der in einem Hohlraum (32, 33), insbesondere einem Zylinderraum (32, 33) beweglich geführt ist, sowie einer Fluiddruckleitung (26) verbunden mit dem oberen Hohlraumteil (32) und einer unteren Fluiddruckleitung (27), die mit dem unteren Hohlraumteil (33) verbunden ist, versehen ist, wobei das Verschlussmittel (31) durch eine Zentrierplatte (5) oberhalb des Durchflusskanals durchgeführt ist, welche einen Druckentlastungsraum (34) aufweist und Dichtmittel, insbesondere Dichtungsringe (13, 16) besitzt, die den Druckentlastungsraum (34) vom Durchflusskanal (28, 29) mit dem unteren Hohlraumteil (33) trennen.

8. Vorrichtung nach Anspruch 7, **dadurch gekennzeichnet, dass** im Ventil die von den Druckfluiden mit Druck beaufschlagte Fläche des Kolbens (3) im Verhältnis zum Querschnitt der Fläche des Ventilsitzes (7) mindestens so groß bemessen ist, dass die Ventilspindel (31) bei Druckbeaufschlagung des oberen Hohlraumes (32) dem Druck im Einlassbereich (28) des Durchflusskanals (28, 29) entgegenwirkt.

9. Vorrichtung nach einem oder mehreren der Ansprüche 7 und 8, **dadurch gekennzeichnet, dass** im Ventil die Bewegungslänge des Kolbens (3) auf höchstens 10 mm begrenzt ist.

10. Vorrichtung nach einem oder mehreren der Ansprüche 7 und 8, **dadurch gekennzeichnet, dass** im Ventil die Fluiddruckleitungen (26) und (27) mit Druckluft betrieben sind.

11. Verfahren zur Umsetzung von chemischen Verbindungen, **dadurch gekennzeichnet, dass** sie unter Verwendung einer Vorrichtung gemäß einem oder mehreren der Ansprüche 1 bis 10 durchgeführt werden.

12. Verfahren zur Hydrierung, Hydroformylierung, Carbonylierung, Carboxylierung, Aminierung, Oxidation oder Chlorierung einer chemischen Verbindung, **dadurch gekennzeichnet, dass** es unter Verwendung einer Vorrichtung gemäß einem oder mehreren der Ansprüche 1 bis 10 durchgeführt wird.

**13.** Verwendung einer Vorrichtung gemäß einem oder mehreren der Ansprüche 1 bis 10 zur Dosierung von mit unter Reaktionsbedingungen inerten Gasen verdünnten oder unverdünnten Gasen ausgewählt aus der Gruppe Wasserstoff, Kohlenmonoxid, Kohlendioxid, Chlor, Phosgen, Ammoniak oder Mischungen davon.

**14.** Verfahren zur parallelen Durchführung von chemischen Reaktionen, **dadurch gekennzeichnet, dass** eine Vorrichtung gemäß einem oder mehreren der Ansprüche 1 bis 10 eingesetzt wird.

Fig. 1

Fig. 2

Fig. 3

**Europäisches Patentamt**

# EUROPÄISCHER RECHERCHENBERICHT

Nummer der Anmeldung

EP 03 00 6882

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 858 583 A (SONNTAG BRUNO) 22. August 1989 (1989-08-22) * Zusammenfassung; Abbildung 1 * ----- | 1 | G05D16/20 G01F1/74 G01F1/86 G01F1/88 |

| | | | RECHERCHIERTE SACHGEBIETE (Int.Cl.7) |
|---|---|---|---|
| | | | G05D G01F |

Der vorliegende Recherchenbericht wurde für alle Patentansprüche erstellt

| Recherchenort | Abschlußdatum der Recherche | Prüfer |
|---|---|---|
| MÜNCHEN | 1. Juli 2003 | Henrikson, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**EP 1 353 255 A1**

**ANHANG ZUM EUROPÄISCHEN RECHERCHENBERICHT
ÜBER DIE EUROPÄISCHE PATENTANMELDUNG NR.**　　　EP 03 00 6882

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-2003

| Im Recherchenbericht angeführtes Patentdokument | Datum der Veröffentlichung | Mitglied(er) der Patentfamilie | Datum der Veröffentlichung |
|---|---|---|---|
| US 4858583 A | 22-08-1989 | DE 3612994 A1 | 29-10-1987 |
| | | AT 56251 T | 15-09-1990 |
| | | CA 1306908 C | 01-09-1992 |
| | | DE 3764770 D1 | 11-10-1990 |
| | | WO 8706302 A1 | 22-10-1987 |
| | | EP 0267209 A1 | 18-05-1988 |
| | | JP 63503156 T | 17-11-1988 |

EPO FORM P0461

Für nähere Einzelheiten zu diesem Anhang : siehe Amtsblatt des Europäischen Patentamts, Nr.12/82